# EUROPEAN PATENT SPECIFICATION

(11) **EP 3 318 132 B1**
(45) Date of publication and mention of the grant of the patent: **01.05.2019**
(21) Application number: 17199305.8
(22) Date of filing: 31.10.2017
(51) Int. Cl.: A22C 15/00

(54) **DEVICE FOR HANGING FILLED MEAT PRODUCTS AND MACHINE COMPRISING SUCH DEVICE**
VORRICHTUNG ZUM HÄNGEN GEFÜLLTER FLEISCHPRODUKTE UND MASCHINE MIT EINEM SOLCHEN GERÄT
DISPOSITIF DE SUSPENSION DE PRODUITS DE VIANDE REMPLIS ET MACHINE COMPORTANT UN TEL DISPOSITIF

(30) Priority: 02.11.2016 ES 201631395
(43) Date of publication of application: 09.05.2018
(73) Proprietor: Serrano Maq. Carnica Comercial, S.L.U., 26006 Logroño (La Rioja) (ES)
(72) Inventor: SERRANO GIL, Gabriel, 26006 Logroño (La Rioja) (ES)
(74) Representative: Maslanka Kubik, Dorota Irena

(56) References cited:
- EP-A1- 1 292 192
- WO-A1-03/051129
- FR-A1- 2 965 455

## Description

### TECHNICAL FIELD

The present invention generally relates to the field of manufacturing filled meat products, and more specifically to the field of manufacturing ring-shaped filled meat products.

### PRIOR ART

As is known in the art, one of the phases in preparing filled meat product is the drying phase, in which the filled meat product is hung and stored in a place that is suitable for said purpose. One of the options commonly resorted to is to hang the filled meat products on rods, such that each rod can receive several filled meat products spaced from one another to enable suitable drying.

Devices for automatically hanging filled meat product are known in the art, such as the device disclosed, for example, in patent document ES2428842. The device disclosed therein allows automatically hanging elongated filled meat products comprising a suspension element at one end.

Other devices like the one disclosed in patent document ES2085394 are also known to allow automatically delivering and hanging a string of filled meat products, i.e., elongated filled meat products connected in series one after another.

However, the devices disclosed in earlier patent documents are not applicable to the case of ring-shaped filled meat products for which said phase of hanging the filled meat products on rods is hard to automate, and in many cases it is done by hand.

In the context of the present invention, ring-shaped filled meat product is understood as any filled meat product the ends of which are attached by means of a string, thereby forming a closed, ring-shaped contour, with an inner opening within said contour (commonly referred to as "horseshoe-shaped filled meat product").

An example of such ring-shaped filled meat products are fresh spicy sausages in natural casing, which are hard to handle since they do not have any one shape (they can be large, small, etc.), and since they are fresh they have a slippery surface and a viscous consistency which means that their geometry can vary, as they move in a "snake-like" manner.

To enable inserting them on the rod it is first necessary to assure a suitable shape of the filled meat product before introducing it onto said rod. Specifically, the inner opening (formed by the ring-shaped contour) must be aligned with the rod. The contour of the filled meat product must be prevented from folding over itself, closing the inner opening.

The document WO03/051129-A1 relates to a prior art device for hanging ring-shaped sausages on rods, having an inlet surface along which ring-shaped sausages move, a vessel into which they fall from the inlet surface, an ejection platform that pushes the receiving vessel, a free end of the rod being introduced through an opening in the vessel, the other end held in a rod holder.

Therefore there is still a need in the art for a device for hanging filled meat products for automatically hanging ring-shaped filled meat products.

### DISCLOSURE OF THE INVENTION

To solve the problems in the prior art, the present invention discloses a device for hanging ring-shaped filled meat products on rods, comprising an inlet surface along which ring-shaped filled meat products move, a V-shaped receiving vessel into which the filled meat products fall from the inlet surface and an ejection platform actuated by ejection means that push the filled meat product from the receiving vessel to introduce it onto a rod at a free end thereof. The free end of the rod is introduced through an opening arranged for that purpose in the ejection platform, and the rod is held at the opposite end in a rod holder.

Specifically, the V-shaped receiving vessel allows assuring the suitable shape of the filled meat product before being introduced onto the rod.

According to another aspect, the present invention discloses a machine for automatically hanging ring-shaped filled meat products comprising a device as claimed in claim 1, a rod dispenser from which rods are dispensed to the device for hanging filled meat products, a rod holder whereby said rods are held at an end opposite the free end thereof, and take-out arms for taking rods out of the device for hanging filled meat products and taking them to a drying carriage.

### BRIEF DESCRIPTION OF THE DRAWINGS

The present invention will be better understood in reference to the following drawings that illustrate a preferred embodiment of the invention that is provided by way of example and must not be interpreted as being limiting of the invention in any way.
Figure 1 shows a perspective view of a machine for hanging filled meat products according to the preferred embodiment of the present invention, comprising a device for hanging filled meat products according to the preferred embodiment of the present invention.
Figure 2 shows a detailed perspective view of the device for hanging filled meat products according to the preferred embodiment of the present invention.
Figure 3 shows a detailed perspective view of the rod holder according to the preferred embodiment of the present invention.
Figure 4 shows, in a side view and a top view, the operating steps of a device for hanging filled meat products according to the preferred embodiment of the present invention.

### DETAILED DISCLOSURE OF THE INVENTION

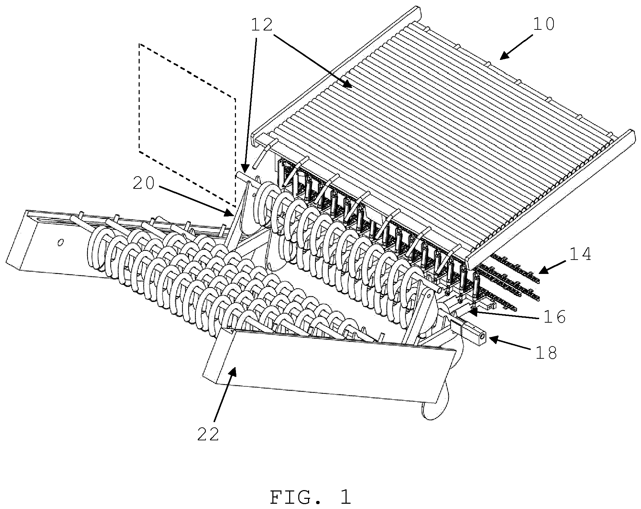

Figure 1 shows a general view of a machine for hanging filled meat products according to the preferred embodiment of the present invention. The machine comprises a rod dispenser (10) containing a plurality of rods (12) from which rods (12) are individually dispensed for hanging filled meat products on same. Chains (14) that are moved by chain-moving means are arranged below the rod dispenser (10). These chains (14) are endless-type chains and are arranged between two shafts in closed-circuit fashion (shafts not shown in the drawings). Filled meat product separating sheets (16) for separating one piece of filled meat product from another are received on said chains (14), as will be described in further detail herein below. The chain-moving means can be a motor or servomotor, for example. The person skilled in the art will understand that movement transmission means known in the art, such as belts, for example, can be used instead of chains.

The machine also comprises a rod holder (18) whereby a rod (12) is held at an end opposite a free end thereof where filled meat products are introduced. A device for hanging filled meat products according to the preferred embodiment of the present invention schematically depicted in Figure 1 by means of a square drawn with discontinuous lines is arranged in the region where the free end of the rod (12) is located.

Take-out arms (20) convey the rods (12) once they are filled with filled meat products from their filling position (between the device for hanging filled meat products and the rod holder (18)) to a drying carriage (22).

Although the machine depicted in Figure 1 comprises three pairs of take-out arms (20) that represent different moments during the operation thereof, the machine according to the preferred embodiment of the present invention preferably comprises 1 or 2 pairs of take-out arms (20).

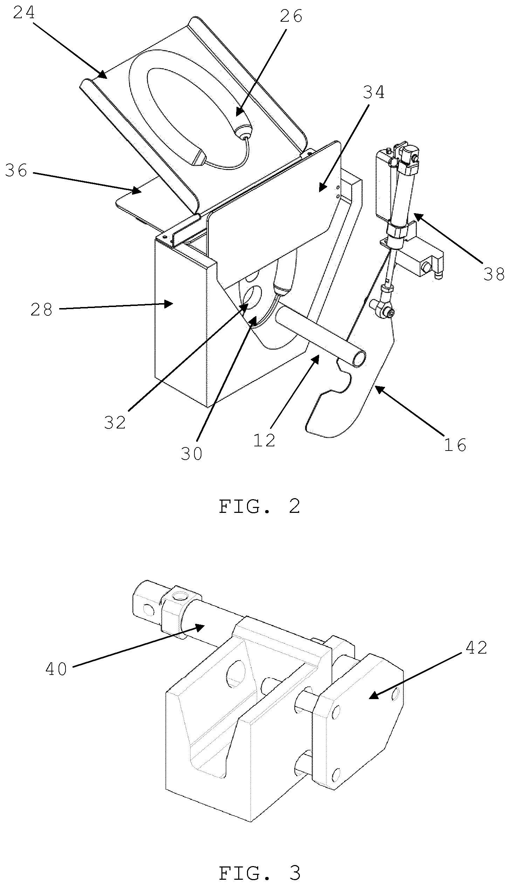

A device for hanging filled meat products according to the preferred embodiment of the present invention is now described in further detail in reference to Figure 2. As can be seen, the device comprises an inlet surface (24) along which ring-shaped filled meat products (26) move. The inlet surface (24) depicted in Figure 2 corresponds to a ramp, but according to alternative embodiments the inlet surface can be of any other applicable type known in the art, such as a conveyor belt, for example. The filled meat products (26) can thereby move along the inlet surface (24) simply due to the effect of inertia, gravity, or with the help of any movement means, such as a conveyor belt or the like.

Once it has moved to the end of the inlet surface, the filled meat product (26) reaches a V-shaped receiving vessel (28). This vessel (28) causes the filled meat product (26) to be deposited with a suitable shape and position so as to facilitate its entry on the rod. As a result of the V shape of the vessel (28), the shape of the filled meat product (26) remains unchanged (without being able to turn) while it is ejected until being deposited on the rod (12), as will be described herein below. In other words, in the vessel (28) the filled meat product (26) maintains its ring shape at all times without the inner opening thereof being closed.

The device also comprises an ejection platform (30) actuated by ejection means (a pneumatic cylinder for example) that push the filled meat product (26) from the receiving vessel (28) to introduce it onto a rod (12) at a free end thereof. The ejection platform (30) comprises an opening (32) arranged so that the free end of the rod (12) can be introduced therein when the ejection platform (30) is moved to push the filled meat product, thereby preventing the rod (12) and the ejection platform (30) from running into one another. As discussed above, though not shown in Figure 2 the rod (12) is held at the opposite end in a rod holder (18) at all times.

According to the preferred embodiment of the present invention, the receiving vessel (28) comprises a sensor for detecting that the filled meat product (26) has been correctly introduced therein. Once the introduction of the filled meat product (26) has been detected, the sensor activates a pneumatic thrusting cylinder (44) which in turn acts on the ejection platform (30) that ejects the filled meat product (26) from the vessel (28) onto the rod (12).

The sensor is preferably a light barrier-type photoelectric sensor that is activated when a filled meat product (26) interrupts the light beam. However, according to alternative embodiments the sensor can be of any other applicable type known in the art, such as for example a diffuse reflective-type sensor, a retroreflective-type sensor, etc.

The device further comprises a brake plate (34) preventing the filled meat product (26) from moving past the receiving vessel (28) from the inlet surface (24). The brake plate (34) is located in an essentially vertical arrangement at the end of the inlet surface (24).

The device also comprises a guide plate (36) between the inlet surface (24) and the vessel (28). The guide plate (36) can move between a withdrawn position in which it allows a filled meat product (26) to fall from the inlet surface (24) into the receiving vessel (28), and an extended position in which it prevents the filled meat product (26) from falling into the receiving vessel (28), for example when there is already another filled meat product (26) being introduced onto the rod (12).

Between the guide plate (36) and the brake plate (34) there is an opening that is large enough so that a filled meat product (26) can fall, but small enough so that the filled meat product (26) falls into the vessel (28) in an essentially vertical arrangement.

The guide plate (36) therefore performs several functions:
a) As mentioned above, when the guide plate (36) is located in its extended position, it prevents the filled meat product (26) from falling into the receiving vessel (28) while the previous filled meat product (26) is being hung on the rod (12). As a result of the brake plate (34) and the guide plate (36), the filled meat product (26) stops right above the V-shaped receiving vessel (28). When the guide plate (36) moves back, the filled meat product (26) falls into the V-shaped receiving vessel (28).
b) It prevents the ejection platform (30) from turning or moving laterally.
c) It prevents a user from being able to introduce their hand into the vessel (28), thereby providing greater user safety.

According to the preferred embodiment of the present invention, the brake plate (34), the guide plate (36) and the ejection platform (30) are attached and move together in an integral manner. However, the invention is not limited to this configuration, and according to another preferred embodiment, for example, the brake plate (34) is attached to just the receiving vessel (28).

Figure 2 also shows a separating sheet (16), though as described above the device comprises a plurality of separating sheets (16) received on chains (14). According to the preferred embodiment of the invention, the separating sheets (16) have a notch in the upper part of their contour allowing them to be coupled onto the rod (12) when they are lifted. According to the preferred embodiment of the invention, the plurality of separating sheets (16) are all separated an equal distance from one another. The device further comprises sheet lifting means for taking the separating sheets (16) from a lower position (shown in Figure 2) to an upper position in which they hold the rod (12) and separate the filled meat products (26) from one another. In the preferred embodiment shown in Figure 2, the sheet lifting means are made up of a pneumatic lifting cylinder (38), but according to alternative embodiments the lifting means can be made up of any other applicable type known in the art, such as cams for example. The sheets (16) have several functions: they center the rod (12), hold the rod (12), separate the filled meat products (26), etc. Upon placing the filled meat product (26) on the rod (12), the corresponding sheet (16) behind the filled meat product (between the filled meat product and the free end of the rod) is lifted by means of the action of the pneumatic lifting cylinder (38) and moved by means of the movement of the chains (14), pushing the filled meat product (26) along the rod (12) in the direction opposite the free end.

One separating sheet (16) is lifted for each filled meat product (26) that is introduced onto the rod (12), and once it has been lifted, it in turn supports the rod (12). So when "n" filled meat products (26) have been introduced, there will be "n" separating sheets (16) supporting the rod (12) along the length thereof.

When the rod (12) is full, the take-out arms (20) take the rod (20) out to take it to the drying carriage (22), and in turn the separating sheets (16) travel back until being positioned again in their starting position waiting for a new empty rod (12) to be deposited. In the starting position, the first separating sheet (16) will be moved towards the opposite end of the rod (12) according to an opening between said first separating sheet (16) and the free end of the rod (12) that is large enough to allow introducing the first filled meat product (26) without it slipping and falling off at the free end.

According to an additional embodiment of the present invention, the chains (14) comprise separating sheets (16) along the entire path of said chains (14) so as to not waste time waiting for the sheets (16) to travel back around the closed circuit (as a result of the action of the chains) to be back in a suitable operating position.

When the rod (12) is empty before introducing the first filled meat product (26), it is also held by the sheet/sheets (in addition to the rod holder (18)) since the sheets (16) either do not return to their lower position, or else all but the first sheet return in order to hold the rod (12) at its free end.

According to another embodiment of the invention, the separating sheets (16) do not move between a lower position and an upper position, rather they are always in the upper position.

The sheets (16) have a surface covering the contour of the filled meat products (26). When the sheets (16) are lifted, they are coupled to the rod (12) due to their upper notch. Hence there is no risk of the filled meat product (26) being lifted while it is moving on the rod (12).

Now in reference to Figure 3, a more detailed view of the aforementioned rod holder (18) is shown in said drawing. This rod holder (18) holds the rod (12) at one end, preventing the rod (12) from moving out of it s position for the purpose of leaving the other end free to enable introducing the filled meat product (26).

It can be seen in Figure 3 that a pneumatic holding cylinder (40) controls the movement of a captive fastener assembly (42) between two positions for either holding the rod (12) in the rod holder (18) or else allowing the rod (12) to be introduced and taken out freely.

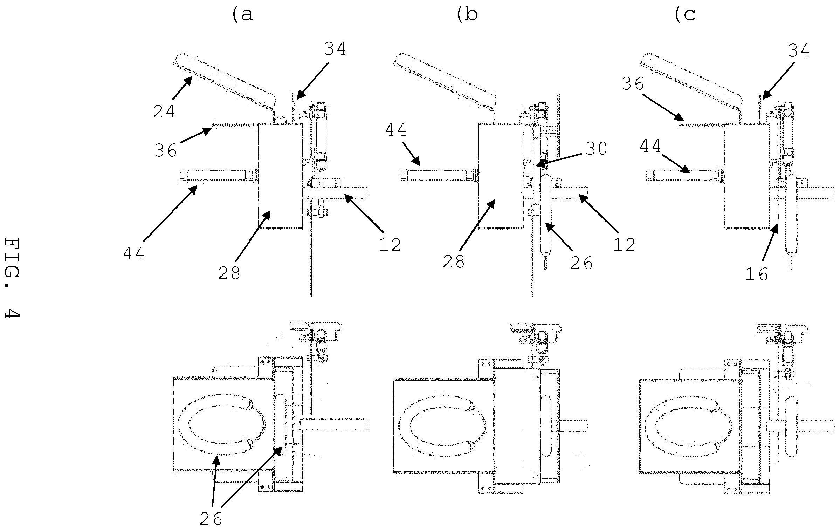

Now in reference to Figure 4, three steps of the operation of the device for hanging filled meat products described above are shown.

The filled meat product (26) coming from the tray of the clipper (not shown in the drawings), from where the filled meat product exits in finished form, moves along the inlet surface (24) towards the V-shaped receiving vessel (28). In step (a) of Figure 4, a filled meat product (26) is already located in the receiving vessel (28), while another one is located on the inlet surface (24). The brake plate (34) prevents the filled meat product (26) from moving past the V-shaped receiving vessel (28). The guide plate (36) prevents the filled meat product (26) from falling into the receiving vessel (28) from the inlet surface (24) while the previous filled meat product is being hung on the rod (12). As a result of the brake plate (34) and guide plate (36), the filled meat product (26) stops right above the V-shaped receiving vessel (28).

In step (b), the sensor of the receiving vessel (28) detects that the filled meat product (26) has been introduced therein and activates a pneumatic thrusting cylinder (44) which in turn acts on the ejection platform (30), that ejects the filled meat product (26) out of the vessel (28) so that it is received on the rod (12) which is held at its other end by a rod holder (18).

Next (step (c)), the pneumatic thrusting cylinder (44) is actuated again, making the ejection platform (30) return to its preceding position. At the same time, a separating sheet (16) is lifted and moved a given distance (by means of chains (14) or belts moved by a motor or servomotor) for the purpose of separating one filled meat product (26) from another by the same distance.

This method is successively repeated until the rod (12) is filled with filled meat products (26), all of which are separated the same distance from one another by the separating sheets (16).

It should be pointed out that due to its simple constructive nature, the device for hanging filled meat products of the present invention can be coupled to and implemented in any other already installed machine for hanging filled meat products by simply making a few minor changes without having to change the entire machine.

Although the present invention has been described in reference to a preferred embodiment thereof, changes and modifications may occur to the person skilled in the art without departing from the scope of the attached claims as a result.

## Claims

1. A device for hanging ring-shaped filled meat products on rods, comprising an inlet surface (24) along which ring-shaped filled meat products (26) move, a V-shaped receiving vessel (28) into which the filled meat products (26) fall from the inlet surface (24), an ejection platform (30) actuated by ejection means that push the filled meat product (26) from the receiving vessel (28) to introduce it onto a rod (12) at a free end thereof, the free end of the rod (12) being introduced through an opening (32) arranged for that purpose in the ejection platform (30), and the rod (12) being held at the opposite end in a rod holder (18).

2. The device according to claim 1, **characterized in that** the ejection means actuating the ejection platform (30) are made up of a pneumatic thrusting cylinder (44).

3. The device according to any of the preceding claims, **characterized in that** it further comprises a filled meat product detection sensor in the receiving vessel (28) for detecting the presence of a filled meat product (26) therein.

4. The device according to claim 3, **characterized in that** the filled meat product detection sensor is a photoelectric sensor.

5. The device according to any of the preceding claims, **characterized in that** it further comprises a brake plate (34) preventing the filled meat product (26) from going from the inlet surface (24) past the receiving vessel (28).

6. The device according to any of the preceding claims, **characterized in that** it further comprises a guide plate (36) between the inlet surface (24) and the vessel (28), that can move between a withdrawn position in which it allows a filled meat product (26) to fall from the inlet surface (24) into the receiving vessel (28), and a extended position in which it prevents the filled meat product (26) from falling into the receiving vessel (28).

7. The device according to claim 6, **characterized in that** the brake plate (34), the guide plate (36) and the ejection platform (30) are attached and move together in an integral manner.

8. The device according to any of the preceding claims, **characterized in that** it further comprises chains (14) which are moved by chain-moving means, said chains (14) receiving filled meat product separating sheets (16) for separating one piece of filled meat product (26) from another.

9. The device according to claim 8, **characterized in that** the chain-moving means are made up of a servomotor.

10. The device according to either of claims 8 and 9, **characterized in that** the filled meat product separating sheets (16) have a notch in the upper part of their contour allowing them to be coupled onto the rod (12) when they are lifted.

11. The device according to any of claims 8 to 10, **characterized in that** the separating sheets (16) are separated an equal distance from one another.

12. The device according to any of claims 8 to 11, **characterized in that** it further comprises sheet lifting means for taking the separating sheets (16) from a lower position to an upper position in which they hold the rod (12) and separate the filled meat products (26) from one another.

13. The device according to claim 12, **characterized in that** the sheet lifting means are made up of a pneumatic lifting cylinder (38).

14. The device according to any of claims 8 to 13, **characterized in that** the chains (14) comprise separating sheets (16) along the entire path of said chains.

15. A machine comprising a device for hanging filled meat products according to any one of claims 1 to 14, a rod dispenser (10) from which rods (12) are dispensed into the device for hanging filled meat products, a rod holder (18) whereby said rods (12) are held at an end opposite the free end thereof where the filled meat products (26) are introduced, and take-out arms (20) for taking rods (12) out of the device for hanging filled meat products and taking them to a drying carriage (22).

## Patentansprüche

1. Vorrichtung zum Hängen ringförmiger gefüllter Fleischprodukte in Stangen, umfassend eine Eintrittsfläche (24) entlang welcher sich ringförmige gefüllte Fleischprodukte (26) bewegen, ein V-förmiges Auffanggefäß (28) in welches die gefüllten Fleischprodukte (26) aus der Eintrittsfläche (24) fallen, eine Ausstoßplattform (30), welche von Ausstoßmitteln betätigt wird, welche die gefüllten Fleischprodukte (26) vom Auffanggefäß (28) drängen, um sie auf eine Stange (12) an einem freien Ende derselben aufzusetzen, wobei das freie Ende der Stange (12) durch eine Öffnung (32) eingeführt wird, welche dazu in der Ausstoßplattform (30) angeordnet ist, und wobei die Stange (12) am entgegengesetzten Ende in einem Stangenhalter (18) gehalten wird.

2. Vorrichtung nach Anspruch 1, **dadurch gekennzeichnet, dass** die Ausstoßmittel, welche die Ausstoßplattform (30) betätigen, aus einem pneumatischen Schiebezylinder (44) aufgebaut sind.

3. Vorrichtung nach einem der vorhergehenden Ansprüche, **dadurch gekennzeichnet, dass** sie zusätzlich einen Detektionssensor für gefüllte Fleischprodukte im Auffanggefäß (28) umfasst, zum Detektieren der Anwesenheit eines gefüllten Fleischproduktes (26) darin.

4. Vorrichtung nach Anspruch 3, **dadurch gekennzeichnet, dass** der Detektionssensor für gefüllte Fleischprodukte ein photoelektrischer Sensor ist.

5. Vorrichtung nach einem der vorhergehenden Ansprüche, **dadurch gekennzeichnet, dass** sie zusätzlich eine Bremsplatte (34) umfasst, welche verhindert, dass das gefüllte Fleischprodukt (26) von der Eintrittsfläche (24) über das Auffanggefäß (28) hinaus geht.

6. Vorrichtung nach einem der vorhergehenden Ansprüche, **dadurch gekennzeichnet, dass** sie zusätzlich eine Führungsplatte (36) zwischen der Eintrittsfläche (24) und dem Gefäß (28) umfasst, welche sich zwischen einer zurückgezogenen Stellung, in welcher sie erlaubt, dass ein gefülltes Fleischprodukt (26) aus der Eintrittsfläche (24) in das Auffanggefäß (28) fällt, und einer ausgefahrenen Stellung, in welcher sie verhindert, dass das gefüllte Fleischprodukt (26) in das Auffanggefäß (28) fällt, bewegen kann.

7. Vorrichtung nach Anspruch 6, **dadurch gekennzeichnet, dass** die Bremsplatte (34), die Führungsplatte (36) und die Ausstoßplattform (30) befestigt sind und sich gesamtheitlich zusammen bewegen.

8. Vorrichtung nach einem der vorhergehenden Ansprüche, **dadurch gekennzeichnet, dass** sie zusätzlich Ketten (14) umfasst, welche von Kettenbewegungsmitteln bewegt werden, wobei die genannten Ketten (14) Trennbleche (16) für gefüllte Fleischprodukte aufnehmen, zum Trennen eines gefüllten Fleischproduktstückes (26) von einem anderen.

9. Vorrichtung nach Anspruch 8, **dadurch gekennzeichnet, dass** die Kettenbewegungsmittel aus einem Servomotor aufgebaut sind.

10. Vorrichtung nach einem der Ansprüche 8 und 9, **dadurch gekennzeichnet, dass** die Trennbleche (16) für gefüllte Fleischprodukte eine Kerbe im oberen Teil dessen Kontur aufweisen, was erlaubt, dass sie sich mit der Stange (12) koppeln können, wenn sie gehoben werden.

11. Vorrichtung nach einem der Ansprüche 8 bis 10, **dadurch gekennzeichnet, dass** die Trennbleche (16) mit einem gleichen Abstand voneinander getrennt sind.

12. Vorrichtung nach einem der Ansprüche 8 bis 11, **dadurch gekennzeichnet, dass** sie zusätzlich Blechhebemittel umfasst, um die Trennbleche (16) von einer unteren Stellung zu einer oberen Stellung zu bringen, in welcher sie die Stange (12) halten und die gefüllten Fleischprodukte (26) voneinander trennen.

13. Vorrichtung nach Anspruch 12, **dadurch gekennzeichnet, dass** die Blechhebemittel aus einem pneumatischen Hebezylinder (38) aufgebaut sind.

14. Vorrichtung nach einem der Ansprüche 8 bis 13, **dadurch gekennzeichnet, dass** die Ketten (14) Trennbleche (16) entlang des gesamten Weges der genannten Ketten umfassen.

15. Maschine umfassend eine Vorrichtung zum Hängen gefüllter Fleischprodukte nach einer der Ansprüche 1 bis 14, einen Stangenspender (10), aus welchem Stangen (12) in die Vorrichtung zum Hängen gefüllter Fleischprodukte gespendet werden, einen Stangenhalter (18), mittels welches die genannten Stangen (12) an einem Ende, welche dem freien Ende desselben entgegengesetzt ist, in welchem die gefüllten Fleischprodukte (26) eingeführt werden, gehalten werden, und Ausnehmearme (20) zum Ausnehmen der Stangen (12) aus der Vorrichtung zum Hängen gefüllter Fleischprodukte und zum Bringen derselben zu einem Trocknungswagen (22).

## Revendications

1. Dispositif de suspension de produits de viande remplis de forme annulaire sur des tiges, comprenant une surface d'entrée (24) long de laquelle se déplacent des produits de viande remplis de forme annulaire (26), un réceptacle récepteur en forme de V (28) dans lequel tombent les produits de viande remplis (26) à partir de la surface d'entrée (24), une plate-forme d'éjection (30) actionnée par des moyens d'éjection qui poussent le produit de viande rempli (26) à partir du réceptacle récepteur (28) pour l'introduire sur une tige (12) à une de ses extrémités libres, l'extrémité libre de la tige (12) étant introduite à travers une ouverture (32) aménagée dans ce but dans la plate-forme d'éjection (30), et la tige (12) étant maintenue à l'extrémité opposée dans un support de tige (18).

2. Dispositif selon la revendication 1, **caractérisé en ce que** les moyens d'éjection actionnant la plate-forme d'éjection (30) sont composés d'un vérin pneumatique de poussée (44).

3. Dispositif selon l'une quelconque des revendications précédentes, **caractérisé en ce qu'**il comprend en outre un capteur de détection de produits de viande remplis dans le réceptacle récepteur (28) pour détecter la présence d'un produit de viande rempli (26) en son sein.

4. Dispositif selon la revendication 3, **caractérisé en ce que** le capteur de détection de produits de viande remplis est un capteur photoélectrique.

5. Dispositif selon l'une quelconque des revendications précédentes, **caractérisé en ce qu'**il comprend en outre une plaquette de frein (34) évitant le produit de viande rempli (26) de passer de la surface d'entrée (24) au-delà du réceptacle récepteur (28).

6. Dispositif selon l'une quelconque des revendication précédentes, **caractérisé en ce qu'**il comprend en outre une plaque de guidage (36) entre la surface d'entrée (24) et le réceptacle (28), qui peut se déplacer entre une position rétractée dans laquelle elle permet qu'un produit de viande rempli (26) tombe de la surface d'entrée (24) dans le réceptacle récepteur (28), et une position déployée dans laquelle elle évite le produit de viande rempli (26) de tomber dans le réceptacle récepteur (28).

7. Dispositif selon la revendication 6, **caractérisé en ce que** la plaquette de frein (34), la plaque de guidage (36) et la plate-forme d'éjection (30) sont fixées et se déplacent ensemble d'une manière solidaire.

8. Dispositif selon l'une quelconque des revendications précédentes, **caractérisé en ce qu'**il comprend en outre des chaines (14) qui se déplacent par le biais de moyens de déplacement par chaînes, lesdites chaînes (14) recevant des feuilles de séparations de produits de viande remplis (16) pour séparer une pièce de produit de viande rempli (26) d'une autre.

9. Dispositif selon la revendication 8, **caractérisé en ce que** les moyens de déplacement par chaînes sont composés d'un servomoteur.

10. Dispositif selon les revendications 8 ou 9, **caractérisé en ce que** les feuilles de séparation de produits de viande remplis (16) ont une entaille dans la partie supérieure de leur contour leur permettant d'être couplées sur la tige (12) lorsqu'elles sont levées.

11. Dispositif selon l'une quelconque des revendications 8 à 10, **caractérisé en ce que** les feuilles de séparation (16) sont séparées l'une de l'autre par une distance égale.

12. Dispositif selon l'une quelconque des revendication 8 à 11, **caractérisé en ce qu'**il comprend en outre des moyens de levage de feuilles pour prendre des feuilles de séparation (16) d'une position inférieure à une position supérieure dans laquelle ils maintiennent la tige (12) et séparent les produits de viande remplis (26) l'une de l'autre.

13. Dispositif selon la revendication 12, **caractérisé en ce que** les moyens de levage de feuilles sont composés d'un vérin pneumatique de levage (38).

14. Dispositif selon l'une quelconque des revendications 8 à 13, **caractérisé en ce que** les chaînes (14) comprennent des feuilles de séparation (16) le long de toute la trajectoire desdites chaînes.

15. Machine comportant un dispositif de suspension de produits de viande remplis selon l'une quelconque des revendications 1 à 14, un distributeur de tiges (10) à travers duquel des tiges (12) sont distribuées dans le dispositif de suspension de produits de viande remplis, un support de tiges (18) selon lequel lesdites tiges (12) sont maintenues à une extrémité opposée à son extrémité libre où les produits de viande remplis (26) sont introduits, et des bras extracteurs (20) pour extraire des tiges (12) du dispositif de suspension de produits de viande remplis et les porter dans un chariot de séchage (22) .
